# EUROPÄISCHE PATENTSCHRIFT

(11) **EP 1 252 110 B1**
(45) Veröffentlichungstag und Bekanntmachung des Hinweises auf die Patenterteilung: **21.01.2004**
(21) Anmeldenummer: 01947439.4
(22) Anmeldetag: 04.07.2001
(51) Int. Cl.: C03B 9/16

(54) **INVERTMECHANISMUS FÜR EINE GLASFORMMASCHINE**
INVERTER MECHANISM FOR A GLASS MOULDING MACHINE
MECANISME INVERSEUR POUR MACHINE DE MOULAGE DU VERRE

(30) Priorität: 26.08.2000 DE 20014811 U
(43) Veröffentlichungstag der Anmeldung: 30.10.2002
(73) Patentinhaber: Heye International GmbH, 31683 Obernkirchen (DE)
(72) Erfinder: SCHNEIDER, Wilhelm, 31749 Auetal (DE); WINKELHAKE, Dirk, 31688 Nienstädt (DE); BÖGERT, Hermann, 31749 Auetal (DE)
(74) Vertreter: Callies, Rainer
(86) Internationale Anmeldenummer: PCT/EP2001/007630
(87) Internationale Veröffentlichungsnummer: WO 2002/018283

(56) Entgegenhaltungen:
- DE-A- 3 527 758
- IT-B- 1 247 203
- US-A- 3 445 218
- US-A- 3 573 027
- US-A- 3 617 233
- US-A- 4 842 636

## Beschreibung

Die Erfindung betrifft einen Invertmechanismus gemäß dem Oberbegriff des Anspruchs 1.

Aus der DE-A1-35 27 758 ist es bekannt, die Invertwelle durch einen Motor hin und her drehend anzutreiben, bei dem es sich vorzugsweise um einen Gleichstrommotor handelt, der direkt mit der Invertwelle verbunden ist und weniger als eine Umdrehung für jede Bewegung des Invertarms zwischen seinen beiden Endstellungen durchläuft (Seite 9, Zeile 7 bis 11). Es ist ein Regelkreis für die Drehbewegung der Invertwelle offenbart. Die koaxiale, fluchtende Anordnung des Motors und der Invertwelle beansprucht viel Raum in waagerechter Richtung.

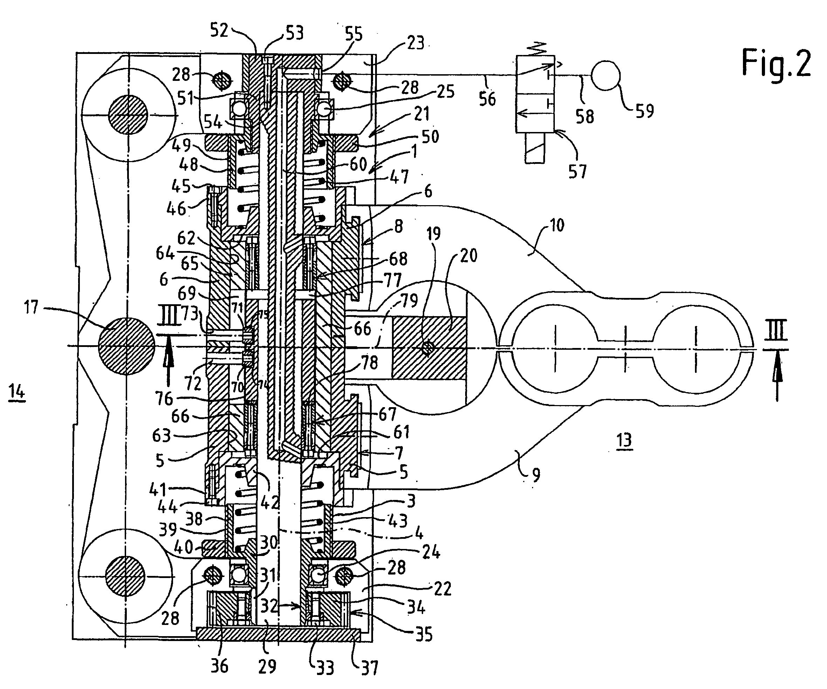

Bei einem an sich bekannten Invertmechanismus (IT-B-1247 203, Fig. 2) ist der Elektroservomotor mit senkrechter Längsachse unterhalb der Deckplatte der Box in einem Gehäuse montiert. Der Elektroservomotor treibt eine koaxiale Welle, die oben eine Schnecke trägt. Die Schnecke steht im Eingriff mit einem auf der Invertwelle befestigten Schneckenrad. Diese Bauweise ist aufwändig, weist große drehende Massen auf und beansprucht wertvollen Raum in der Box.

Aus der DE-C1-195 17 281 ist es an sich bekannt, die beiden Führungshülsen unmittelbar auf der Invertwelle zu lagern. Die axialen Öffnungs- und Schließbewegungen der Führungshülsen sind nicht miteinander synchronisiert.

Aus der US-A-3 445 218 ist es an sich bekannt, an jeder Mündungsformhalterhälfte eine Zahnstange zu befestigen. Die Zahnstangen erstrecken sich parallel und im Abstand zueinander parallel zu der Öffnungs- und Schließrichtung der Mündungsformhalterhälften. Der Abstand wird durch ein hin und her drehend antreibbares Ritzel überbrückt, das mit beiden Zahnstangen im Eingriff steht. Auf diese Weise ist mit hohem baulichen Aufwand und großem Platzbedarf eine Synchronisation der Öffnungs- und Schließbewegungen der Mündungsformhalterhälften erreicht.

Der Erfindung liegt die Aufgabe zugrunde, den Drehantrieb der Invertwelle und die Funktion des Invertmechanismus zu verbessern.

Diese Aufgabe ist durch die Merkmale des Anspruchs 1 gelöst. Bei der Glasformmaschine kann es sich z.B. um eine Sektion einer sogenannten I.S. (Individual Section)-Glasformmaschine handeln. Vorzugsweise werden die Mündungsformhalterhälften in einem Betriebszyklus mit wenigstens einer Mündungsform und einem dadurch gehaltenen Külbel aus der Vorformstation um 180° in die Fertigformstation gedreht. Dort werden die Mündungsformhalterhälften und damit Mündungswerkzeughälften der Mündungsform geöffnet und das Külbel in eine Fertigform der Fertigformstation abgegeben. Sodann werden die Mündungsformhalterhälften mit den Mündungsformen wieder geschlossen und um 180° in die Vorformstation zurückgedreht. Durch die "liegende" und zu der Invertwelle parallele Anordnung des Elektroservomotors oberhalb der Deckplatte wird der dort vorhandene Raum optimal genutzt. Außerdem wird innerhalb der Box kein Raum für den Invertmechanismus und seinen Antrieb benötigt. Der Innenraum der Box steht daher in vollem Umfang für andere Aufgaben zur Verfügung. Ferner lässt sich der Invertmechanismus auf diese Weise leichter montieren und demontieren und ist für Inspektions- und Wartungsarbeiten leichter zugänglich. Das Getriebe überträgt die Leistung des Elektroservomotors quer zu dessen Längsachse auf die Invertwelle. Auf verhältnismäßig einfache Weise ist eine sichere Zwangssynchronisation der Öffnungs- und Schließbewegungen der Führungshülsen und damit der Mündungsformhalterhälften gewährleistet.

Gemäß Anspruch 2 ist das Planetengetriebe vorzugsweise koaxial mit dem Elektroservomotor angeordnet.

Gemäß Anspruch 3 ergibt sich ein sehr stabiles und zuverlässiges Getriebe.

Die Merkmale des Anspruchs 4 finden Verwendung, wenn verhältnismäßig geringe Leistungen zu übertragen sind.

Gemäß Anspruch 5 wird vorgegangen, wenn höhere Leistungen zu übertragen sind. Hier können z.B. Zahnkettentriebe gemäß DIN 8190 und 8191 Verwendung finden.

Die Merkmale des Anspruchs 6 schaffen konstruktive Freiheit in den Bereichen der Invertwelle, an denen beim Stand der Technik der Drehantrieb angreift.

Die Merkmale der Ansprüche 7 bis 10 dienen jeweils zur weiteren Ausgestaltung des Invertmechanismus. Als Druckmedium für das Öffnen der Mündungsformhalterhälften wird insbesondere Druckluft verwendet.

Diese und weitere Merkmale und Vorteile der Erfindung werden nachfolgend anhand der in den Zeichnungen dargestellten Ausführungsbeispiele näher erläutert. Es zeigt
Fig. 1 die Draufsicht auf einen Invertmechanismus und Teile einer Fertigformstation,
Fig. 2 die Schnittansicht nach Linie II-II in Fig. 3 durch den Invertmechanismus gemäß Fig. 1,
Fig. 3 die Schnittansicht nach Linie III-III in Fig. 2,
Fig. 4 die Schnittansicht nach Linie IV-IV in Fig. 1,
Fig. 5 die Ansicht gemäß Linie V-V in Fig. 4 und
Fig. 6 eine der Fig. 5 entsprechende Ansicht auf ein abgewandeltes Getriebe.

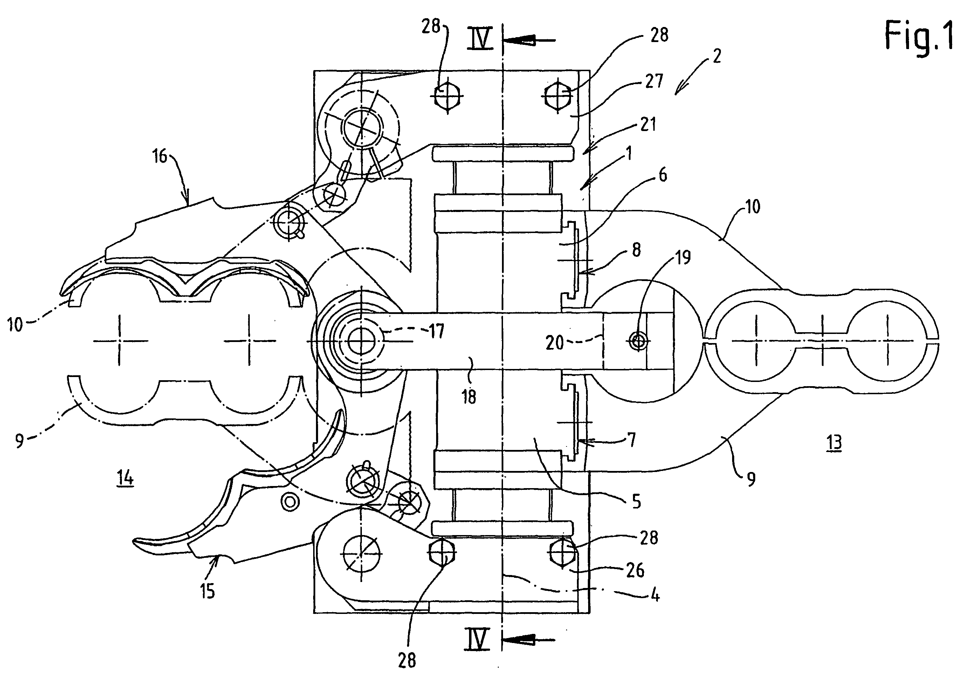

Fig. 1 zeigt einen Invertmechanismus 1 für eine Glasformmaschine 2, bei der es sich insbesondere um eine Sektion einer I.S.-Glasformmaschine handeln kann.

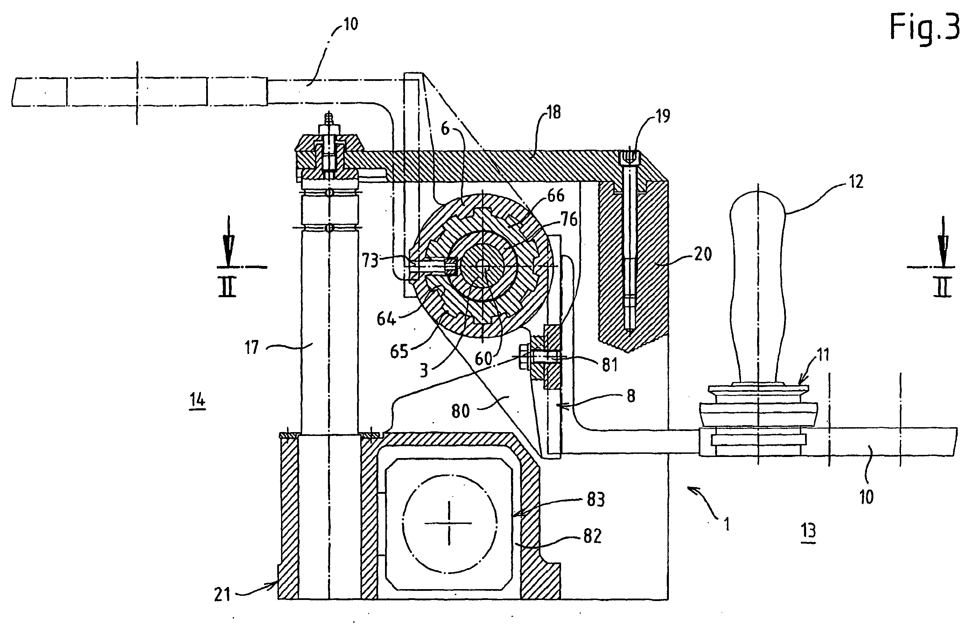

Der Invertmechanismus 1 weist eine Invertwelle 3 (Fig. 2) mit waagerechter Längsachse 4 auf. Mit der Invertwelle 3 sind in später zu beschreibender Weise Führungshülsen 5 und 6 drehfest, aber in Richtung der Längsachse 4 verschiebbar verbunden. Mit jeder Führungshülse 5, 6 ist über eine Führungsverbindung 7 und 8 eine Mündungsformhalterhälfte 9 und 10 verbunden. Die Mündungsformhalterhälften 9, 10 halten in diesem Beispiel in an sich bekannter Weise zwei Mündungsformen 11, von denen eine in Fig. 3 gezeichnet ist.

In an sich bekannter Weise werden die Mündungsformen 11 mit dadurch gehaltenen Külbeln 12 (Fig. 3) aus einer Vorformstation 13 der Glasformmaschine 2 um 180° um die Längsachse 4 herum in eine Fertigformstation 14 der Glasformmaschine 2 gedreht. In der Fertigformstation 14 sind in an sich bekannter Weise Fertigformzangenhälften 15 und 16 um eine senkrechte Schamiersäule 17 schwenkbar gelagert. Zur Stabilisierung der Scharniersäule 17 ist an deren oberem Ende (vgl. auch Fig. 3) ein waagerechtes Joch 18 befestigt, dessen anderes Ende durch eine Schraube 19 an einer senkrechten Säule 20 eines Gehäuses 21 des Invertmechanismus 1 befestigt ist.

In Fig. 1 sind die Mündungsformhalterhälften 9, 10 auf der rechten Seite in ihrer geschlossenen Stellung gezeigt. Auf der linken Seite der Fig. 1 sind die Mündungsformhalterhälften 9, 10 strichpunktiert in ihrer geöffneten Stellung gezeichnet, in der die zugehörigen Mündungsformen (11 in Fig. 3) ebenfalls geöffnet sind und die Külbel (12 in Fig. 3) in die Fertigformen abgeben.

In Fig. 2 sind untere Lagertragschalen 22 und 23 des Gehäuses 21 erkennbar, die jeweils ein Wälzlager 24 und 25 aufnehmen. Auf die Wälzlager 24, 25 und die unteren Lagertragschalen 22, 23 wird sodann jeweils eine obere Lagertragschale 26 und 27 (Fig. 1) gesetzt und durch zwei Schrauben 28 fixiert.

Auf ein in Fig. 2 unteres axiales Ende 29 der Invertwelle 3 ist gemäß Fig. 2 eine Hülse 30 geschoben, die an ihrem in Fig. 2 unteren Ende wenigstens einen (vorzugsweise zwei diametral gegenüberliegende) Schlitz(e) 31 aufweist. Diese geschlitzte Hülse 30 ist Teil eines Ringfederspannsatzes 32, über den durch Schrauben 33 einerseits die Hülse 30 drehfest an das Ende 29 angepresst und andererseits ein zweites Zahnrad 34 eines Getriebes 35 an der Hülse 30 festgelegt wird. Eine das Getriebe 35 aufnehmende Öffnung 36 in dem Gehäuse 21 ist durch einen Gehäusedeckel 37 verschließbar.

Die Hülse 30 liegt an einem Innenring des Wälzlagers 24 an und ist in Fig. 2 nach oben hin zu einer Tasse 38 erweitert. Die Tasse 38 weist ein Außengewinde 39 auf, entlang dem eine Stellmutter 40 einstellbar ist. Die Stellmutter 40 bildet einen Axialanschlag für einen Ringkolben 41, der mit einem Innenflansch 42 abgedichtet auf der Invertwelle 3 axial verschiebbar ist. In die Tasse 38 ist das eine Ende einer als Druckfeder ausgebildeten Rückstellfeder 43 eingesetzt, deren anderes Ende sich an dem Ringkolben 41 abstützt. Der Ringkolben 41 ist über Schrauben 44 mit der Führungshülse 5 verbunden. Die Führungshülse 6 ist über Schrauben 45 mit einem ähnlichen Ringkolben 46 verbunden. An der in Fig. 2 oberen Seite des Ringkolbens 46 ist eine als Druckfeder ausgebildete Rückstellfeder 47 abgestützt, die auf der anderen Seite in eine Tasse 48 eintaucht. Auch die Tasse 48 ist mit einem Außengewinde 49 und einer darauf einstellbaren Stellmutter 50 versehen. Die Tasse 48 ist an ihrem oberen Ende mit einer Hülse 51 verschraubt, die an einem Innenring des Wälzlagers 25 anliegt. Die Hülse 51 weist einen in Fig. 2 oberen Boden 52 auf, der durch Schrauben 53 an einem in Fig. 2 oberen axialen Ende 54 der Invertwelle 3 befestigt ist.

Der Boden 52 weist eine Anschlussöffnung 55 auf, die über eine Leitung 56 mit einem 3Wege/2Stellungsventil 57 verbunden ist. Das Wegeventil 57 ist über eine Leitung 58 mit einer Druckluftquelle 59 verbunden. Von der Anschlussöffnung 55 erstreckt sich ein Kanal 60 durch den Boden 52 und den in Fig. 2 oberen Teil der Invertwelle 3 bis zu einander gegenüberliegenden Kolbenflächen 61 und 62 der Ringkolben 41, 46.

Die Führungshülsen 5, 6 stehen jeweils über ein Keilnabenprofil 63 und 64 (siehe auch Fig. 3) mit einem Keilwellenprofil einer Antriebshülse 66 im Eingriff. Die Antriebshülse 66 erstreckt sich in beide Führungshülsen 5, 6 und ist an ihren axialen Enden jeweils durch einen Ringfederspannsatz 67 und 68 an der Invertwelle 3 festgelegt. Die Antriebshülse 66 weist zwischen den Ringfederspannsätzen 67, 68 einen achsparallelen Schlitz 69 auf. Jede Führungshülse 5, 6 weist einen sich radial nach innen erstreckenden und dort eine Kurvenrolle 70 und 71 tragenden Stift 72 und 73 auf. Die Stifte 72, 73 durchdringen den Schlitz 69, während die Kurvenrollen 70, 71 jeweils in eine Kurvennut 74 und 75 einer Kurvenhülse 76 eingreifen. Die Kurvenhülse 76 ist frei drehbar auf der Invertwelle 3 gelagert, aber in axialer Richtung einerseits durch einen Bund 77 der Invertwelle 3 und andererseits durch eine Ringscheibe 78 neben dem Ringfederspannsatz 76 festgelegt. Die Kurvennuten 74, 75 sind spiegelbildlich zu einer Mittenquerebene 79 der Kurvenhülse 76 in einer äußeren Oberfläche der Kurvenhülse 76 und dreidimensional in Umfangsrichtung und in axialer Richtung der Kurvenhülse 76 ausgebildet. Die Kurvenhülse 76 weist geringfügiges radiales Spiel zu einer Innenfläche der Antriebshülse 66 auf.

Wenn, ausgehend von dem in Fig. 2 gezeichneten Zustand, das Wegeventil 57 in seine andere Schaltstellung durchgeschaltet wird, gelangt Druckluft über die Leitung 56 und den Kanal 60 auf die Kolbenflächen 61, 62 und schiebt die Ringkolben 41, 46 gegen die Kraft der Rückstellfedern 43, 47 auseinander. Dadurch werden auch die Führungshülsen 5, 6 axial voneinander entfernt, wobei die Kurvenrollen 70, 71 in den Kurvennuten 74, 75 der Kurvenhülse 76 abrollen und dabei die Kurvenhülse 76 um die Längsachse 4 drehen. Die spiegelbildliche Ausführung der Kurvennuten 74, 75 hat zur Folge, dass die Führungshülsen 5, 6 und damit die Mündungsformhalterhälften 9, 10 sich streng synchron öffnen. Diese Öffnungsbewegung setzt sich fort, bis der Ringkolben 41 an der Stellmutter 40 und der Ringkolben 46 an der Stellmutter 50 zur Anlage kommen.

Sollen die Mündungsformhalterhälften 9, 10 wieder geschlossen werden, wird das Wegeventil 57 in seine in Fig. 2 gezeigte Schaltstellung zurückgeschaltet. Dadurch werden die Zylinderräume der Ringkolben 41, 46 sowie der Kanal 60 und die Leitung 56 entlüftet, und die Ringkolben 41, 46 samt den damit verbundenen Bauteilen kehren unter der Wirkung der Rückstellfedern 43, 47 in die in Fig. 2 gezeigte Ausgangslage zurück.

Gemäß Fig. 3 ist jede der Führungshülsen 5,6 mit einem Fortsatz 80 versehen, an dem längs der Führungsverbindung 7, 8 die zugehörige Mündungsformhalterhälften 9, 10 einstellbar und durch eine Schraube 81 fixierbar ist.

In dem Gehäuse 21 ist unten ein Kanal 82 ausgebildet, der einen Antrieb 83 aufnimmt. Durch den Antrieb 83 ist, wie später im Einzelnen gezeigt werden wird, das zweite Zahnrad 34 (Fig. 2) hin und her drehend antreibbar. Entsprechend wird in Fig. 3 die Mündungsformhalterhälfte 10 mit ihren Mündungsformen 11 und Külbeln 12 aus der mit voll ausgezogenen Linien dargestellten Ausgangsstellung um 180° in die strichpunktiert dargestellte Übergabestellung in der Fertigformstation 14 gedreht.

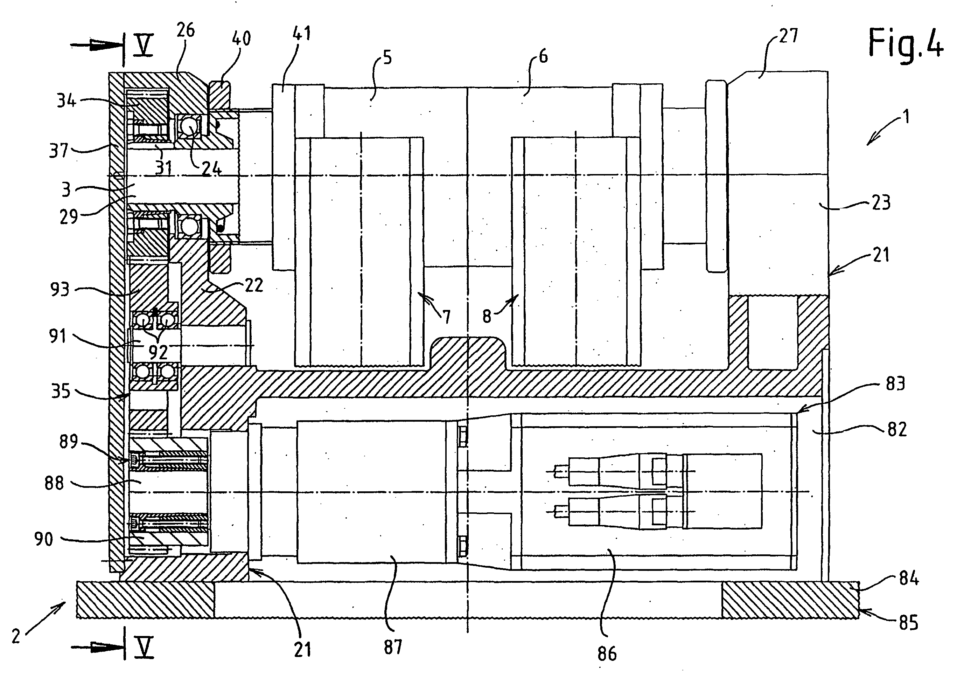

Gemäß Fig. 4 ist der Invertmechanismus 1 auf eine Deckplatte 84 eines Gestells (Box) 85 der Glasformmaschine 2 aufgesetzt und dort befestigt.

Der in dem Kanal 82 des Gehäuses 21 untergebrachte Antrieb 83 weist einen Elektroservomotor 86 und ein daran koaxial angeflanschtes Planetengetriebe 87 auf. Mit einer Abtriebswelle 88 des Planetengetriebes 87 ist über einen Ringfederspannsatz 89 ein erstes Zahnrad 90 fest verbunden. In dem Gehäuse 21 ist eine Achse 91 festgelegt, auf der über Wälzlager 92 ein Zwischenzahnrad 93 frei drehbar gelagert ist. Das Zwischenzahnrad 93 kämmt einerseits mit dem ersten Zahnrad 90 und andererseits mit dem zweiten Zahnrad 34. All diese Zahnräder bilden das Getriebe 35 zwischen der Abtriebswelle 88 und der Invertwelle 3.

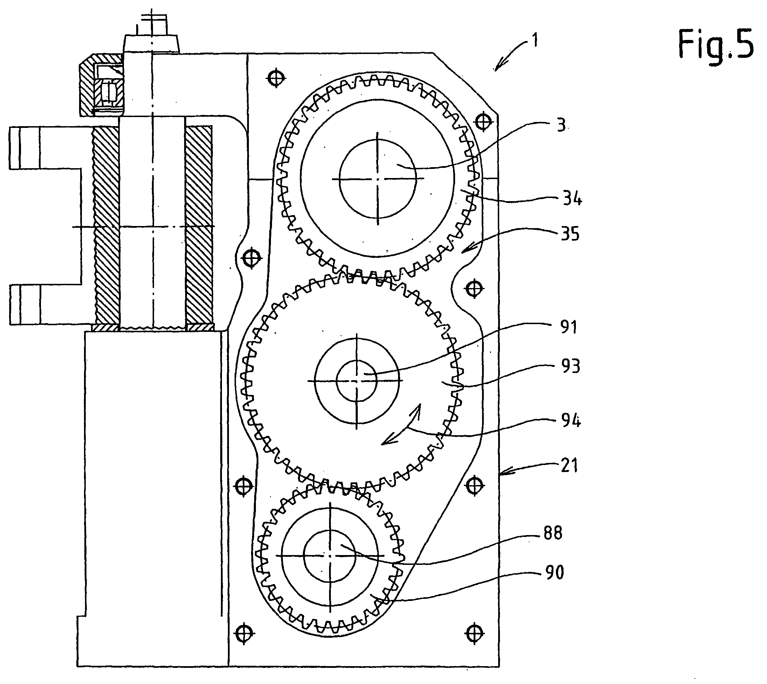

Fig. 5 zeigt weitere.Einzelheiten des Getriebes 35. An dem Zwischenzahnrad 93 ist durch einen Doppelpfeil 94 angedeutet, dass alle Zahnräder des Getriebes 35 hin und her drehend angetrieben werden.

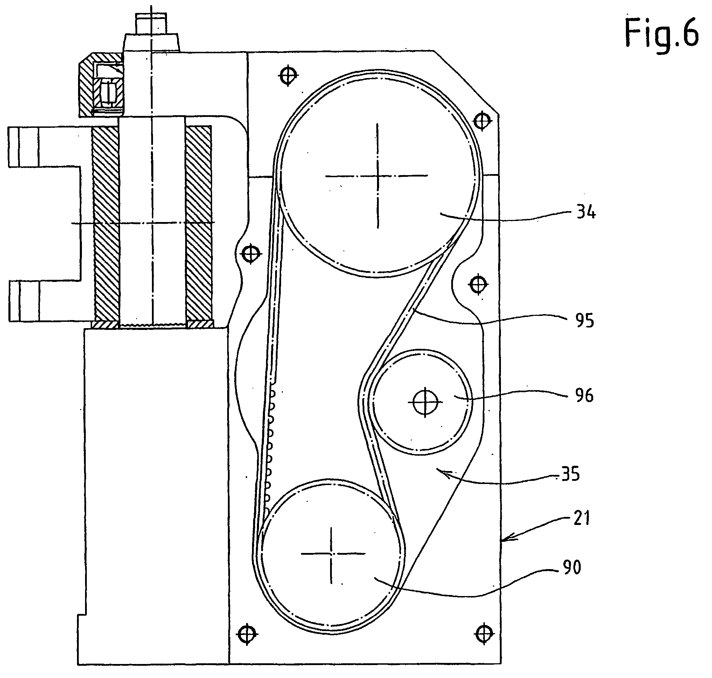

Bei dem Ausführungsbeispiel gemäß Fig. 6 sind gleiche Teile wie bei dem bisher beschriebenen Ausführungsbeispiel mit gleichen Bezugszahlen versehen.

Um das erste Zahnrad 90 und das zweite Zahnrad 34 ist in Fig. 6 ein Zahnriemen 95 gelegt, der durch ein exzentrisch zustellbares Spannrad 96 gespannt werden kann.

Anstelle des Zahnriemens 95 kann bei höheren zu übertragenden Leistungen auch eine Zahnkette eines Zahnkettentriebs Verwendung finden, z.B. gemäß DIN 8090 und 8091.

## Patentansprüche

1. Invertmechanismus (1) für eine Glasformmaschine (2),
wobei der Invertmechanismus (1) oberhalb einer Deckplatte (84) eines Gestells (Box) (85) der Glasformmaschine (2) angeordnet ist,
mit einer waagerechten Invertwelle (3), durch die relativ zueinander axial verschiebbare, wenigstens eine Mündungsform (11) haltende Mündungsformhalterhälften (9,10) zwischen einer Vorformstation (13) und einer Fertigformstation (14) der Glasformmaschine (2) hin und her drehbar sind,
wobei die Invertwelle (3) durch einen Elektroservomotor (86) hin und her drehend antreibbar ist,
und wobei der Elektroservomotor (86) mit waagerechter Längsachse oberhalb der Deckplatte (84) angeordnet ist,
**dadurch gekennzeichnet, dass** die Längsachse des Elektroservomotors (86) und die Invertwelle (3) parallel zueinander angeordnet sind,
dass eine Abtriebswelle des Elektroservomotors (86) über ein Getriebe (35) mit der Invertwelle (3) verbunden ist,
dass jede Mündungsformhalterhälfte (9,10) an einer zu der Invertwelle (3) konzentrischen, durch die Invertwelle (3) hin und her drehend antreibbaren und relativ zu der Invertwelle (3) axial verschiebbaren Führungshülse (5,6) montierbar ist,
dass jede Führungshülse (5;6) einen sich radial nach innen erstreckenden und dort eine Kurvenrolle (70;71) tragenden Stift (72;73) aufweist,
dass jede Kurvenrolle (70;71) in eine Kurvennut (74;75) einer frei drehbar, aber axial fixiert auf der Invertwelle (3) gelagerten Kurvenhülse (76) eingreift,
und dass die Kurvennuten (74;75) spiegelbildlich zu einer Mittenquerebene (79) der Kurvenhülse (76) in einer äußeren Oberfläche der Kurvenhülse (76) und dreidimensional in Umfangs- und axialer Richtung der Kurvenhülse (76) ausgebildet sind.

2. Invertmechanismus nach Anspruch 1,
**dadurch gekennzeichnet, dass** zwischen die Abtriebswelle des Elektroservomotors (86) und das Getriebe (35) ein Planetengetriebe (87) eingeschaltet ist.

3. Invertmechanismus nach Anspruch 1 oder 2,
**dadurch gekennzeichnet, dass** das Getriebe (35) ein mit dem Elektroservomotor (86) koaxiales, durch den Elektroservomotor (86) hin und her drehend antreibbares erstes Zahnrad (90), ein mit dem ersten Zahnrad (90) kämmendes Zwischenzahnrad (93) und ein mit dem Zwischenzahnrad (93) kämmendes, auf der Invertwelle (3) befestigtes zweites Zahnrad (34) aufweist.

4. Invertmechanismus nach Anspruch 1 oder 2,
**dadurch gekennzeichnet, dass** das Getriebe (35) einen Zahnriementrieb (Fig. 6) mit einem zu dem Elektroservomotor (86) koaxialen, durch den Elektroservomotor (86) hin und her drehend antreibbaren ersten Zahnrad (90) und einem auf der Invertwelle (3) befestigten zweiten Zahnrad (34) aufweist.

5. Invertmechanismus nach Anspruch 1 oder 2,
**dadurch gekennzeichnet, dass** das Getriebe (35) einen Zahnkettentrieb mit einem zu dem Elektroservomotor (86) koaxialen, durch den Elektroservomotor (86) hin und her drehend antreibbaren ersten Zahnkettenrad und einem auf der Invertwelle (3) befestigten zweiten Zahnkettenrad aufweist.

6. Invertmechanismus nach einem der Ansprüche 1 bis 5,
**dadurch gekennzeichnet, dass** das Getriebe (35) an einem axialen Ende (29) der Invertwelle (3) angreift.

7. Invertmechanismus nach einem der Ansprüche 1 bis 6,
**dadurch gekennzeichnet, dass** jede Führungshülse (5;6) mit einem Keilnabenprofil (63;64) in ein Keilwellenprofil (65) einer mit der Invertwelle (3) drehfest verbindbaren Antriebshülse (66) eingreift,
dass die Antriebshülse (66) sich in beide Führungshülsen(5;6) erstreckt,
und dass die Antriebshülse (66) im Bewegungsbereich der beiden Stifte (72,73) einen die Stifte (72,73) durchlassenden, achsparallelen Schlitz (69) aufweist.

8. Invertmechanismus nach Anspruch 7,
**dadurch gekennzeichnet, dass** die Antriebshülse (66) neben Stirnseiten der Kurvenhülse (76) jeweils durch einen Ringfederspannsatz (67,68) an der Invertwelle (3) festlegbar ist.

9. Invertmechanismus nach Anspruch 7 oder 8,
**dadurch gekennzeichnet, dass** gegenüber Stirnseiten der Antriebshülse (66) jeweils ein auf der Invertwelle (3) abgedichtet verschiebbarer Ringkolben (41;46) der Führungshülsen (5;6) angeordnet ist,
und dass durch einen in der Invertwelle (3) ausgebildeten Kanal (60) Kolbenflächen (61;62), die der Antriebshülse (66) zugewandt sind, ein Druckmedium (59) gleichzeitig zuführbar ist.

10. Invertmechanismus nach Anspruch 9,
**dadurch gekennzeichnet, dass** jeder Ringkolben (41;46) an einer andererseits an der Invertwelle (3) abgestützten Rückstellfeder (43;47) abgestützt ist.

## Claims

1. Invert mechanism (1) for a glass forming machine (2),
wherein the invert mechanism (1) is disposed above a cover plate (84) of a frame (box) (85) of the glass forming machine (2),
having a horizontal invert shaft (3) by means of which the neck mold holder halves (9, 10), which are axially displaceable with respect to each other and hold at least one neck mold (11), can be rotated in a reciprocating manner between a preforming station (13) and a finishing forming station (14) of the glass forming machine (2),
wherein the invert shaft (3) can be rotationally driven in a reciprocating manner by an electric servomotor (86),
and wherein the electric servomotor (86) is disposed with its horizontal longitudinal axis above the cover plate (84),
**characterized in that** the longitudinal axis of the electric servomotor (86) and the invert shaft (3) are disposed in parallel with each other,
that a driven shaft of the electric servomotor (86) is connected to the invert shaft (3) via a transmission (35),
that each neck mold holder half (9,10) can be mounted on a guide sleeve (5,6) which is concentric to the invert shaft (3), can be rotationally driven in a reciprocating manner by the invert shaft (3) and is axially displaceable relative to the invert shaft (3),
that each guide sleeve (5;6) has a pin (72;73) which extends radially inwards and at that location carries a cam roller (70;71),
that each cam roller (70; 71) engages in a cam groove (74; 75) of a cam sleeve (76) which is mounted so as to freely rotate but be axially fixed on the invert shaft (3),
and that the cam grooves (74; 75) are formed with mirror symmetry with respect to a transverse middle plane (79) of the cam sleeve (76) in an outer surface of the cam sleeve (76) and in a three-dimensional manner in the peripheral direction and in the axial direction of the cam sleeve (76).

2. Invert mechanism according to claim 1,
**characterized in that** between the driven shaft of the electric servomotor (86) and the transmission (35) a planetary gear (87) is connected.

3. Invert mechanism according to claim 1 or 2,
**characterized in that** the transmission (35) has a first toothed wheel (90) which is coaxial to the electric servomotor (86) and can be rotationally driven in a reciprocating manner by the electric servomotor (86), an intermediate toothed wheel (93) which meshes with the first toothed wheel (90), and a second toothed wheel (34) which meshes with the intermediate toothed wheel (93) and is attached to the invert shaft (3).

4. Invert mechanism according to claim 1 or 2,
**characterized in that** the transmission (35) has a toothed belt drive (Figure 6) having a first toothed wheel (90) which is coaxial to the electric servomotor (86) and can be rotationally driven in a reciprocating manner by the electric servomotor (86), and having a second toothed wheel (34) which is attached to the invert shaft (3).

5. Invert mechanism according to claim 1 or 2,
**characterized in that** the transmission (35) has a toothed chain drive having a first toothed chain wheel which is coaxial to the electric servomotor (86) and can be rotationally driven in a reciprocating manner by the electric servomotor (86), and having a second toothed chain wheel which is attached to the invert shaft (3).

6. Invert mechanism according to one of claims 1 to 5,
**characterized in that** the transmission (35) engages an axial end (29) of the invert shaft (3).

7. Invert mechanism according to one of claims 1 to 6,
**characterized in that** each guide sleeve (5; 6) is engaged by means of a spline hub profile (63; 64) in a spline shaft profile (65) of a drive sleeve (66) which can be connected in a rotationally fixed manner to the invert shaft (3),
that the drive sleeve (66) extends into both guide sleeves (5; 6),
and that, in the region of movement of the two pins (72, 73), the drive sleeve (66) has an axially parallel slot (69) allowing passage of the pins (72, 73).

8. Invert mechanism according to claim 7,
**characterized in that** the drive sleeve (66) can be fixed on the invert shaft (3) next to the end faces of the cam sleeve (76) by a respective annular spring clamping unit (67, 68).

9. Invert mechanism according to claim 7 or 8,
**characterized in that** opposite the end faces of the drive sleeve (66) is disposed a respective annular piston (41; 46) ofthe guide sleeves (5; 6) which can be displaced in a sealed manner on the invert shaft (3),
and that by way of a duct (60) formed in the invert shaft (3) a pressure medium (59) can be simultaneously supplied to piston surfaces (61; 62) which face the drive sleeve (66).

10. Invert mechanism according to claim 9,
**characterized in that** each annular piston (41; 46) is supported on a return spring (43; 47) which is supported on the other side against the invert shaft (3).

## Revendications

1. Mécanisme inverseur (1) pour machine à mouler le verre (2),
dans lequel le mécanisme inverseur (1) est disposé au-dessus d'une plaque de couverture (84) d'un bâti (caisson) (85) de la machine à mouler le verre (2),
avec un arbre inverseur (3) horizontal, qui fait tourner en va-et-vient des moitiés de support de moule d'embouchure (9, 10) retenant au moins un moule d'embouchure (11) entre un poste de préformage (13) et un poste de finition (14) de la machine à mouler le verre (2),
dans lequel l'arbre inverseur (3) peut être entraîné en rotation en va-et-vient par un servomoteur électrique (86),
et dans lequel le servomoteur électrique (86) est disposé avec son axe longitudinal horizontal au-dessus de la plaque de couverture (84),
**caractérisé en ce que** les axes longitudinaux du servomoteur électrique (86) et de l'arbre inverseur (3) sont parallèles l'un à l'autre,
**en ce qu'**un arbre de sortie du servomoteur électrique (86) est relié par un engrenage (35) à l'arbre inverseur (3),
**en ce que** chaque moitié de support de moule d'embouchure (9, 10) peut être montée sur un manchon de guidage (5, 6) concentrique de l'arbre inverseur (3), pouvant être entraîné en rotation en va-et-vient par l'arbre inverseur (3) et coulissant dans le sens axial par rapport à l'arbre inverseur (3),
**en ce que** chaque manchon de guidage (5 ; 6) présente un goujon (72 ; 73) s'étendant vers l'intérieur dans le sens radial et portant un galet de came (70 ; 71),
**en ce que** chaque galet de came (70 ; 71) se met en prise dans une gorge de came (74 ; 75) d'un manchon de came (76) supporté de façon librement mobile en rotation mais fixe dans le sens axial sur l'arbre inverseur (3),
et **en ce que** les gorges de came (74 ; 75) sont conformées en miroir par rapport à un plan transversal médian (79) du manchon de came (76) dans une surface extérieure du manchon de came (76) et en trois dimensions dans le sens de la circonférence et le sens axial du manchon de came (76).

2. Mécanisme inverseur selon la revendication 1, **caractérisé en ce qu'**un engrenage à train planétaire (87) est intercalé entre l'arbre de sortie du servomoteur électrique (86) et l'engrenage (35).

3. Mécanisme inverseur selon la revendication 1 ou 2, **caractérisé en ce que** l'engrenage (35) présente une première roue dentée (90) coaxiale du servomoteur électrique (86) et pouvant être entraînée en rotation en va-et-vient par le servomoteur électrique (86), une roue dentée intermédiaire (93) engrenée avec la première roue dentée (90) et une seconde roue dentée (34) engrenée avec la roue dentée intermédiaire (93) et fixée sur l'arbre inverseur (3).

4. Mécanisme inverseur selon la revendication 1 ou 2, **caractérisé en ce que** l'engrenage (35) présente un entraînement à courroie crantée (Figure 6) avec une première roue dentée (90) coaxiale du servomoteur électrique (86) et pouvant être entraînée en rotation en va-et-vient par le servomoteur électrique (86) et une seconde roue dentée (34) fixée sur l'arbre inverseur (3).

5. Mécanisme inverseur selon la revendication 1 ou 2, **caractérisé en ce que** l'engrenage (35) présente un entraînement à chaîne dentée avec une première roue à chaîne dentée coaxiale du servomoteur électrique (86) et pouvant être entraînée en rotation en va-et-vient par le servomoteur électrique (86) et une seconde roue à chaîne dentée fixée sur l'arbre inverseur (3).

6. Mécanisme inverseur selon l'une ou l'ensemble des revendications 1 à 5, **caractérisé en ce que** l'engrenage (35) se met en prise sur une extrémité axiale (29) de l'arbre inverseur (3).

7. Mécanisme inverseur selon l'une ou l'ensemble des revendications 1 à 6, **caractérisé en ce que** chaque manchon de guidage (5 ; 6) se met en prise dans une cannelure intérieure (63 ; 64) d'un profil cannelé (65) d'un manchon d'entraînement (66) pouvant être assemblé avec l'arbre inverseur (3) de manière solidaire en rotation,
**en ce que** le manchon d'entraînement (66) s'étend dans les deux manchons de guidage (5 ; 6),
et **en ce que** le manchon d'entraînement (66) présente dans la zone de mouvement des deux goujons (72, 73) une fente (69) parallèle à l'axe et laissant passer les goujons (72, 73).

8. Mécanisme d'inversion selon la revendication 7, **caractérisé en ce que** le manchon d'entraînement (66) peut être fixé sur l'arbre inverseur (3) à côté de faces frontales du manchon de came (76) par un ensemble de serrage à anneau ressort (67, 68) de chaque côté.

9. Mécanisme d'inversion selon la revendication 7 ou 8, **caractérisé en ce qu'**il est prévu en regard de chaque face frontale du manchon d'entraînement (66) un piston annulaire (41 ; 46) des manchons de guidage (5 ; 6) coulissant de manière étanche sur l'arbre inverseur (3),
et **en ce qu'**un fluide sous pression (59) peut être amené simultanément par un canal (60) ménagé dans l'arbre inverseur (3) à des surfaces de piston (61 ; 62) orientées vers le manchon d'entraînement (66).

10. Mécanisme d'inversion selon la revendication 9, **caractérisé en ce que** chaque piston annulaire (41 ; 46) est appuyé sur un ressort de rappel (43 ; 47) qui s'appuie à son autre extrémité sur l'arbre inverseur (3).
